# EUROPEAN PATENT APPLICATION

(11) **EP 3 680 649 A1**
(43) Date of publication of application: **15.07.2020**
(21) Application number: 19151579.0
(22) Date of filing: 14.01.2019
(51) Int. Cl.: G01N 21/95, G01N 21/956

(54) **SEMICONDUCTOR INSPECTION METHOD AND SYSTEM**

(71) Applicant: Detection Technology Oy, 90590 Oulu (FI)
(72) Inventor: WINKLER, Alex, 02150 Espoo (FI)
(74) Representative: Papula Oy

(57) **Abstract**

According to an embodiment, a method for semiconductor inspection comprises emitting infrared, IR, radiation (205) onto a semiconductor sample (202) from a first plurality of directions with respect to the semiconductor sample. The method may further comprise detecting (with the IR detector 203) the IR radiation (206) passed through the semiconductor sample from a second plurality of directions with respect to the semiconductor sample. The method may further comprise producing at least one sinogram (Radon transform data) based on the detected IR radiation.

## Description

### TECHNICAL FIELD

The present disclosure relates to the field semiconductors, and more particularly to a semiconductor inspection system and a method for semiconductor inspection.

### BACKGROUND

Semiconductors and compound semiconductors, such as II-VI and III-V semiconductors (e.g. CdTe, CdZnTe, CdMnTe and GaAs), can suffer from microscopic defects. These defects can degrade the performance of devices manufactured from these semiconductors. The number of defects can grow exponentially with the decreasing defect size.

Knowledge of the defects may be utilised in improvements in the production of semiconductor materials as well as in improving in their use in products, such as radiation detectors or optical components.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an object to provide a semiconductor inspection system and a semiconductor inspection method. The foregoing and other objects are achieved by the features of the independent claims. Further implementation forms are apparent from the dependent claims, the description and the figures.

According to a first aspect, a method for semiconductor inspection comprises: emitting infrared, IR, radiation onto a semiconductor sample from a first plurality of directions with respect to the semiconductor sample, wherein at least part of the IR radiation passes through the semiconductor sample; detecting the IR radiation passed through the semiconductor sample from a second plurality of directions with respect to the semiconductor sample; and producing at least one sinogram based on the detected IR radiation. This method may facilitate fast scanning of the semiconductor sample at a high resolution even under industrial production conditions.

In an implementation form of the first aspect, the method for semiconductor inspection further comprises producing a model of the semiconductor sample based on the at least one sinogram, wherein the model comprises at least one of: at least one cross-sectional image of the semiconductor sample; and a three-dimensional model of the semiconductor sample. The model may indicate the internal structure, such as defects, of the semiconductor sample. This method may facilitate the model to be used to efficiently inspect the semiconductor sample.

In a further implementation form of the first aspect, the method for semiconductor inspection further comprises: based on the model, detecting at least one of: a number of defects in the semiconductor sample; a size of at least one defect in the semiconductor sample; and a location of at least one defect in the semiconductor sample. The number of defects, the size of defects, and/or the location of defects may enable efficiently assessment of the quality of the semiconductor sample.

In a further implementation form of the first aspect, the method for semiconductor inspection further comprises: assigning a rating for the semiconductor sample according to at least one of: the number of defects in the semiconductor sample; the size of the at least one defect in the semiconductor sample; and the location of the at least one defect in the semiconductor sample. The rating may facilitate efficient quantification of the quality of the semiconductor sample.

In a further implementation form of the first aspect, the detecting the IR radiation passed through the semiconductor sample from the second plurality of directions with respect to the semiconductor sample comprises rotating the semiconductor sample around a rotational axis with respect to an IR detector. Rotating the semiconductor sample may facilitate the IR detector to efficiently receive the IR radiation from the second plurality of directions.

In a further implementation form of the first aspect, the method for semiconductor inspection further comprises: moving the semiconductor sample along a movement axis with respect to the IR detector. This method may facilitate the IR detector to obtain scans of different cross-sections of the semiconductor sample.

In a further implementation form of the first aspect, the rotational axis is substantially parallel with the movement axis. This method may facilitate the IR detector to move helically with respect to the semiconductor sample and to receive IR radiation passed through different parts of the semiconductor sample.

In a further implementation form of the first aspect, the IR radiation is emitted onto the semiconductor sample using a fan beam geometry. Fan beam geometry may be simple to implement and may provide fast imaging of the semiconductor sample.

In a further implementation form of the first aspect, the semiconductor sample comprises at least one of: a II-VI semiconductor; and a III-V semiconductor. The IR radiation may be especially suitable for inspecting these types of semiconductors.

It is to be understood that the implementation forms of the first aspect described above may be used in combination with each other. Several of the implementation forms may be combined together to form a further implementation form.

According to a second aspect, a semiconductor inspection system comprises: an infrared, IR, radiation source configured to: emit IR radiation onto a semiconductor sample from a first plurality of directions with respect to the semiconductor sample, wherein at least part of the IR radiation passes through the semiconductor sample; an IR detector configured to: detect the IR radiation passed through the semiconductor sample from a second plurality of directions with respect to the semiconductor sample; and a computing device, coupled to the IR detector, configured to: produce at least one sinogram based on the detected IR radiation. With these configurations, the system may be able to scan the semiconductor sample quickly at a high resolution even under industrial production conditions.

In an implementation form of the second aspect, the computing device is further configured to perform at least one of: produce at least one cross-sectional image of the semiconductor sample based on the at least one sinogram; and produce at least one three-dimensional model of the semiconductor sample based on the at least one sinogram. The model may indicate the internal structure, such as defects, of the semiconductor sample. The model may be used to efficiently inspect the semiconductor sample.

In a further implementation form of the second aspect, the semiconductor inspection system further comprises a rotation device configured to rotate the semiconductor sample around a rotational axis with respect to the IR detector. As the semiconductor sample rotates with respect to the IR detector, the IR detector may be able to efficiently receive the IR radiation from the second plurality of directions.

In a further implementation form of the second aspect, the semiconductor inspection system further comprises a movement device configured to move the semiconductor sample along a movement axis with respect to the IR detector. Thus, the IR detector may be able to obtain scans of different cross-sections of the semiconductor sample.

In a further implementation form of the second aspect, the semiconductor inspection system further comprises an anti-scatter grid positioned between the semiconductor sample and the IR detector. The anti-scatter grid may reduce the amount of scattered IR radiation reaching the IR detector.

In a further implementation form of the second aspect, the IR radiation source is configured to emit the IR radiation using a fan beam geometry. Fan beam geometry may be simple to implement and the system may be able to image the semiconductor sample quickly.

It is to be understood that the implementation forms of the second aspect described above may be used in combination with each other. Several of the implementation forms may be combined together to form a further implementation form.

Many of the attendant features will be more readily appreciated as they become better understood by reference to the following detailed description considered in connection with the accompanying drawings.

### DESCRIPTION OF THE DRAWINGS

In the following, example embodiments are described in more detail with reference to the attached figures and drawings, in which:
Fig. 1 illustrates a schematic flow chart of a method for inspecting semiconductor samples according to an embodiment;
Fig. 2 illustrates a schematic block diagram of a system for inspecting semiconductor samples according to an embodiment;
Fig. 3 illustrates a schematic representation of a system for inspecting semiconductor samples with a cone beam geometry according to an embodiment;
Fig. 4 illustrates a schematic representation of a system for inspecting semiconductor samples with a fan beam geometry according to an embodiment;
Fig. 5 illustrates a schematic representation of a system for inspecting semiconductor samples with a curved detector according to an embodiment;
Fig. 6 illustrates a schematic representation of a system for inspecting semiconductor samples with a parallel beam geometry according to an embodiment;
Fig. 7 illustrates a schematic representation of a system for inspecting semiconductor samples comprising a rotating IR radiation source and IR detector according to an embodiment;
Fig. 8 illustrates a schematic representation of a system for inspecting semiconductor samples comprising a rotating semiconductor sample according to an embodiment;
Fig. 9 illustrates a schematic representation of a IR detector comprising an anti-scatter grid according to an embodiment; and
Fig. 10 illustrates a schematic representation of a sinogram and a corresponding cross-sectional image according to an embodiment.

In the following, identical reference signs refer to identical or at least functionally equivalent features.

### DETAILED DESCRIPTION

In the following description, reference is made to the accompanying drawings, which form part of the disclosure, and in which are shown, by way of illustration, specific aspects in which the present disclosure may be placed. It is understood that other aspects may be utilized and structural or logical changes may be made without departing from the scope of the present disclosure. The following detailed description, therefore, is not to be taken in a limiting sense, as the scope of the present disclosure is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

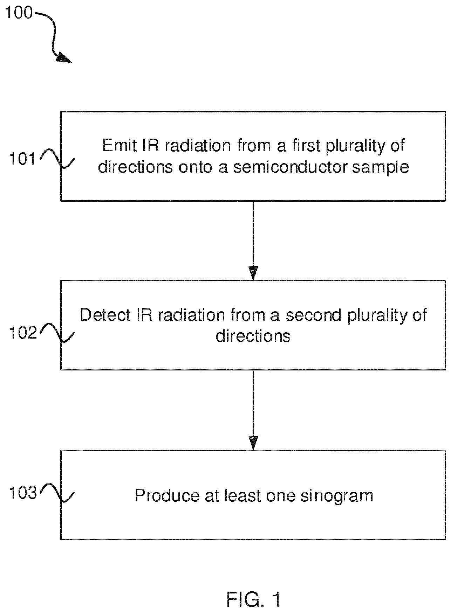

Fig. 1 illustrates a schematic flow chart of a method 100 for semiconductor inspection. Herein, the method for semiconductor inspection may also be referred to as a method.

According to an embodiment, the method 100 comprises a step 101 of emitting infrared, IR, radiation onto a semiconductor sample from a first plurality of directions with respect to the semiconductor sample. At least part of the IR radiation passes through the semiconductor sample. The method may further comprise a step 102 of detecting the IR radiation passed through the semiconductor sample from a second plurality of directions with respect to the semiconductor sample. The method 100 may further comprise a step 103 of producing at least one sinogram based on the detected IR radiation.

Herein, the term "plurality" may refer to at least two.

According to an embodiment, the method 100 further comprises a step of producing a model of the semiconductor sample based on the at least one sinogram.

According to an embodiment, the method 100, further comprises, a step of based on the model, detecting at least one of: a number of defects in the semiconductor sample; a size of at least one defect in the semiconductor sample; and a location of at least one defect in the semiconductor sample. Also some combination of these may be detected. For example, detecting the density of defects comprises detecting the number of defects and taking into account the volume of the semiconductor sample. For example, detecting the total volume of defects may comprise detecting the number of and the size of the defects. The size of a defect may be measured, for example, using the volume of the defect and/or the diameter of the defect. The detection may be performed, for example, by a user or by a computer program. The computer program may utilise machine learning in the detecting. A computing device may implement the computer program.

According to an embodiment, the method 100 further comprises a step of assigning a rating for the semiconductor sample according to at least one of: the number of defects in the semiconductor sample; the size of the at least one defect in the semiconductor sample; and the location of the at least one defect in the semiconductor sample. The assigning a rating may be performed, for example, by a user or by a computer program. The computer program may utilise machine learning to rate the semiconductor sample. A computing device may implement the computer program.

The rating may comprise a numerical value. The rating may correspond to the quality of the semiconductor sample. Higher quality semiconductor samples may be used to implement higher quality components, such as direct conversion detectors or optical devices.

The semiconductor sample may be any semiconductor. For example, the semiconductor sample may be or comprise any compound semiconductor. For example, the semiconductor sample may be a material to be used in a photodiode, direct conversion radiation detector or optical devices. For example, CdTe may also be used for IR optical devices, such as switches or lenses, for example.

According to an embodiment, the semiconductor sample comprises a II-VI semiconductor and/or a III-V semiconductor.

For example, the semiconductor sample may comprise cadmium telluride (CdTe), cadmium zinc telluride (CdZnTe), cadmium manganese telluride (CdMnTe), and/or gallium arsenide (GaAs).

As a person skilled in the art is aware, a II-VI semiconductor may refer to a compound semiconductor that comprises an element with two valence electrons and an element with six valence electrons.

Similarly, a III-V semiconductor may refer to a compound semiconductor that comprises an element with three valence electrons and an element with five valence electrons. Furthermore, a II-VI semiconductor or a III-V semiconductor may be an alloy comprising a plurality of semiconductors. For example, cadmium zinc telluride is an alloy of cadmium telluride and zinc telluride.

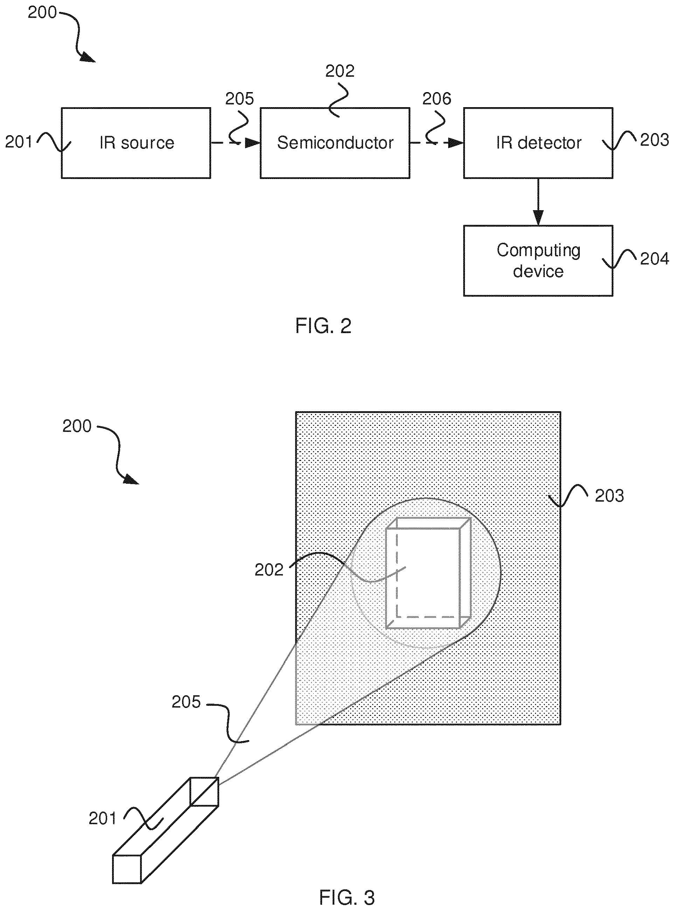

Fig. 2 illustrates a schematic block diagram of a system 200 for inspecting semiconductor samples according to an embodiment. Herein, the system for inspecting semiconductor samples may also be referred to as a system.

According to an embodiment, the system 200 comprises an infrared, IR, radiation source 201. The IR radiation source 201 may be configured to emit IR radiation 205 onto a semiconductor sample 202 from a first plurality of directions with respect to the semiconductor sample 202. At least part of the IR radiation may pass through the semiconductor sample 202.

The system 200 may further comprise an IR detector 203. The IR detector 203 may be configured to detect the IR radiation 206 passed through the semiconductor sample 202 from a second plurality of directions with respect to the semiconductor sample 202.

The system 200 may further comprise a computing device 204 coupled to the IR detector 203. The computing device 204 may be configured to produce at least one sinogram based on the detected IR radiation.

Herein, the terms "infrared", "infrared radiation", "IR", and "IR radiation" may refer to electromagnetic radiation with a wavelength in the range 700 nanometres (nm) - 1 millimetre (mm).

As a person skilled in the art can appreciate, the system 200 may implement some or all of the features of the method 100. Herein, some features of the method 100 and the system 200 may be disclosed in terms of structural elements and/or functionality of the system 200. Any of these features may be combined with any other feature of the method 100 and/or of the system 200 disclosed herein.

The method 100 and/or the system 200 may be able to reduce data acquisition time in semiconductor inspections, because the overall number of images may be only dependent on the number of directions used to image the semiconductor sample. Directions may also be referred to as projection angles. Relative movement may be utilised to obtain different projection angles, for example by rotating the IR sensor 203 around the semiconductor sample 202, or by rotating the semiconductor sample 202 in front of the IR detector 203.

A common size for a semiconductor sample may be few millimetres (mm) to centimetres (cm), but sample sizes of micrometres (pm) and metres are equally possible, given adequate sizes of the other components of the method 100 and/or the system 200. The size of a small defect may be below 3 micrometres (µm), or several millimetre (mm). IR sensitive sensors that are large enough to cover such semiconductor samples exist. These sensors can also be fast enough to allow quick data acquisition. Various IR emitters may be used as the IR radiation source 201. The IR radiation source 201 may provide sufficient intensity to allow at least part of the IR radiation 205 to transmit through the semiconductor sample 202 and that the intensity reaching the IR detector 203 is high enough for data acquisition.

Instead of acquiring a large number of two-dimensional (2D) images and combining these later into a three-dimensional (3D) map, sinograms of various projection angles can be acquired. The sinograms can be later computed into 3D models at high resolution that may provide at least the same amount of information as 3D maps constructed from 2D images. This may be beneficial compared to, for example, randomly scanned samples, since the defect distribution may not be uniform over the volume of the semiconductor.

Size, number and location of the defects can be noted and the semiconductor can be rated according to quality criteria.

The computing device 204 may be configured to produce a cross-sectional image and/or a three-dimensional model from the sinogram using, for example, the Radon transform and/or the inverse Radon transform. The computing device 204 may utilise any reconstruction algorithm, such as the Fourier-domain reconstruction algorithm, the back projection algorithm, an algebraic reconstruction technique, or the iterative reconstruction algorithm. As a person skilled in the art can appreciate, the computing device 204 may use different algorithms for different beam types, such as fan beams and parallel beams.

The computing device 204 may comprise at least one processor. The at least one processor may comprise, for example, one or more of various processing devices, such as a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The computing device 204 may further comprise a memory. The memory may be configured to store, for example, computer programs and the like. The memory may comprise one or more volatile memory devices, one or more non-volatile memory devices, and/or a combination of one or more volatile memory devices and non-volatile memory devices. For example, the memory may be embodied as magnetic storage devices (such as hard disk drives, floppy disks, magnetic tapes, etc.), optical magnetic storage devices, and semiconductor memories (such as mask ROM, PROM (programmable ROM), EPROM (erasable PROM), flash ROM, RAM (random access memory), etc.).

As a person skilled in the art can appreciate, when the computing device 204 is configured to implement some functionality, some component and/or components of the computing device 204, such as the at least one processor and/or the memory, may be configured to implement this functionality. Furthermore, when the at least one processor is configured to implement some functionality, this functionality may be implemented using program code comprised, for example, in the memory.

Fig. 3 illustrates a schematic representation of a system 200 for inspecting semiconductor samples with according to an embodiment. The IR radiation source 201 emits IR radiation 205 onto a semiconductor sample 202. At least part of the IR radiation 205 may pass through the semiconductor sample 202. Part of the IR radiation 205 may be absorbed and/or reflect by the semiconductor sample 202. An IR detector 203 may detect the IR radiation that passes through the semiconductor sample 202.

In the embodiment of Fig. 3, the IR radiation source 201 emits the IR radiation 205 using a cone beam geometry. In cone beam geometry, the IR beam may be shaped like a cone so that the IR rays are divergent. This is only an illustrative example, and the IR radiation source 201 may be configured to emit the beam using any beam geometry. An IR radiation beam may comprise a plurality of IR radiation rays.

The IR radiation source 201 may comprise an LED, a plurality of LEDs, a laser, a plurality of lasers, or any other source or plurality of sources of IR radiation.

The IR detector 203 may comprise a photodiode layer configured to detect incident IR radiation.

The IR detector 203 may comprise a plurality of pixels. Each pixel may be configured to detect the intensity of IR radiation at the location of the pixel. Thus, the IR detector 203 may detect the spatial distribution of the IR radiation 206 passed through the semiconductor sample 202. Each pixel may convert the intensity value to, for example, a voltage or a current.

The plurality of pixels comprised in the IR detector 203 may be configured into a one-dimensional row or column. In such a case, the IR detector 203 may be configured to detect the spatial distribution of the IR radiation 206 passed through the semiconductor sample 202 in one dimension. Thus, the IR detector 203 may image the semiconductor sample 202.

The plurality of pixels comprised in the IR detector 203 may be configured into a two-dimensional matrix or array. In such a case, the IR detector 203 may be configured to detect the spatial distribution of the IR radiation 206 passed through the semiconductor sample 202 in two dimensions. Thus, the IR detector 203 may image the semiconductor sample 202.

The spatial distribution of the IR radiation 206 received by the IR detector 203 may indicate optical properties, such as absorption coefficients, in different parts of the semiconductor sample 202. The optical properties may indicate the location, the number, and/or the size of defects in the semiconductor sample 202.

The computing device 204 may be coupled to the IR detector 203. For example, the computing device 204 may be configured to read the voltage or current of each pixel comprised in the IR detector 203. The computing device 204 may store the values read from the pixels into a memory.

According to an embodiment, the IR radiation 205 is emitted onto the semiconductor sample 202 using a fan beam geometry.

For example, the IR radiation source 201 may be configured to emit the IR radiation 205 using a fan beam geometry.

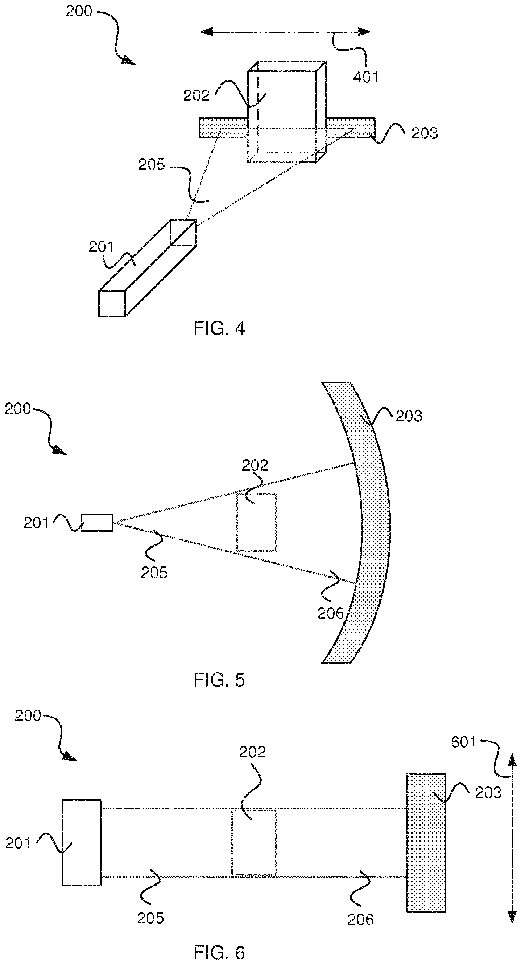

Fig. 4 illustrates a schematic representation of a system 200 for inspecting semiconductor samples according to an embodiment. In the embodiment of Fig 4, the IR radiation source 201 may be configured to emit the IR radiation 205 using a fan beam geometry. When the IR radiation 205 has a fan beam geometry, the IR radiation 205 may form a divergent beam in one plane. The beam may have any shape in the direction perpendicular to the plane. The IR radiation source 201 may be, for example, a point-like source.

When the IR radiation source 201 is configured to use fan beam geometry, the IR detector 203 may be configured to detect the spatial distribution of the IR radiation 206 passed through the semiconductor sample 202 in one dimension. For example, in the embodiment of Fig. 4, the IR detector 203 may be configured to detect the spatial distribution in the horizontal direction 401. This spatial distribution may correspond to a single "slice" of the semiconductor sample 202. A slice may correspond to a thin section of the semiconductor sample.

Fig. 5 illustrates a schematic representation of a system for inspecting semiconductor samples according to an embodiment. The IR detector 203 may be of any shape. For example, in the embodiment of Fig. 5, the IR detector 203 has a curvature that is non-zero in the plane of the drawing. Fig. 5 may illustrate the system 200 from a top, a bottom, or a side view.

The IR detector 203 may be, for example, substantially circular, substantially semi-circular, substantially curved, or substantially flat. Even when the shape of the IR detector 203 is not substantially flat, the IR detector 203 may comprise a plurality of substantially flat detector panels, wherein the detector panels may be configured into a substantially non-flat shape. The shape of the IR detector 203 may be configured according to the used beam shape. For example, a curved IR detector 203 may be beneficial when used with a fan beam geometry.

Fig. 6 illustrates a schematic representation of a system for inspecting semiconductor samples according to an embodiment. Fig. 6 may illustrate the system 200 from a top, a bottom, or a side view.

The IR radiation source 201 may be configured to emit the IR radiation 205 using a parallel beam geometry. The IR radiation 205 may comprise a plurality of beams that are substantially parallel with respect to each other. The parallel beams may be positioned in one plane. To achieve a parallel beam geometry, the IR radiation source 201 may comprise a plurality of point-like sources, such as LEDs. The point-like sources may be configured as a matrix or as an array.

In the embodiments of Fig. 4, Fig. 5, and Fig. 6, the shape of the IR beam is only illustrated in one plane. The shape of the IR beam may be different in different directions and/or planes. The shape of the IR beam may also be three-dimensional.

The IR detector 203 may be configured to detect the spatial distribution of the IR radiation 206 passed through the semiconductor sample 202 in one dimension. For example, in the embodiment of Fig. 6, the IR detector 203 may be configured to detect the spatial distribution in the dimension 601 illustrated in Fig. 6. This spatial distribution may correspond to a single "slice" of the semiconductor sample 202.

Herein, the term "substantially parallel" may indicate that the angle between the objects in question is small. For example, the angle may be less than 20 degrees, less than 15 degrees, less than 10 degrees, less than 5 degrees, less than 2 degrees, or less than 1 degree.

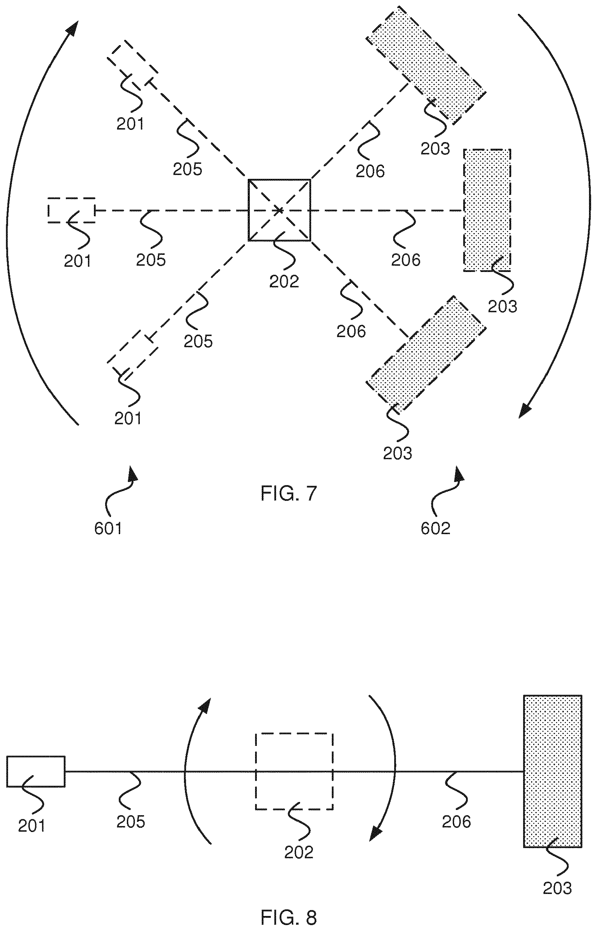

Fig. 7 illustrates a schematic representation of a system for inspecting semiconductor samples according to an embodiment. The IR radiation source 201 and/or the IR detector 203 may be configured to rotate around the semiconductor sample 202. Fig. 7 illustrates three different directions 601 for the IR radiation source 201 and three different directions 602 for the IR detector 203. This is only an example, and the IR radiation source 201 may emit IR radiation onto the semiconductor sample 202 from any number of directions, and the IR detector 203 may detect IR radiation from any number of directions.

According to an embodiment, the step 102 of detecting the IR radiation passed through the semiconductor sample from the second plurality of directions with respect to the semiconductor sample comprises a step of rotating the semiconductor sample around a rotational axis with respect to an IR detector. The semiconductor sample may rotate around a rotational axis with respect to a three-dimensional coordinate system attached to the IR detector.

For example, the semiconductor sample 202 may rotate substantially continuously. During the rotation of the semiconductor sample 202, the IR detector may image the semiconductor sample 202 from a plurality of directions by receiving the IR radiation 206 passed through the semiconductor sample 202.

For example, the system 200 may further comprise a rotation device configured to rotate the semiconductor sample 202 around a rotational axis with respect to the IR detector 203. The rotation device may be attached to the IR radiation source 201 and/or the IR detector 203. The rotation device may be implemented using any device and/or components that can rotate the semiconductor sample 202 around the rotational axis with respect to the IR detector 203. For example, the rotation device may be implemented using an electric motor.

If the IR radiation source 201 rotates around the semiconductor sample 202, the IR radiation source 201 may emit the IR radiation 205 onto the semiconductor sample 202 from a first plurality of directions.

If the IR detector 203 rotates around the semiconductor sample 202, the IR detector 203 source may detect the IR radiation 206 passed through the semiconductor sample 202 from a second plurality of directions.

The rotation of the IR radiation source 201 and the rotation of the IR detector 203 may be synchronised. For example, the IR radiation source 201 may be configured to be on the opposite side of the semiconductor sample 202 compared to the IR detector 203.

According to embodiment, the rotational axis is substantially perpendicular to the first plurality of directions and the second plurality of directions. For example, the first plurality of directions and the second plurality of directions may define a two-dimensional plane, and the rotational axis may be substantially perpendicular to this plane.

Herein, the term "substantially perpendicular" may indicate that the angle between the objects in question may be close to 90 degree. For example, the angle may be in the range 70 - 90 degrees, in the range 80 - 90 degree, in the range 85 - 90 degrees, in the range 88 - 90 degrees, or in the range 89 - 90 degrees.

In some embodiments, the IR radiation source 201 may be configured to rotate around the semiconductor sample 202, and the IR detector 203 may be configured to remain stationary with respect to the semiconductor sample 202. For example, the IR detector 203 may be substantially circular or semi-circular. Thus, as the IR radiation source 201 rotates around the semiconductor sample 202, the IR radiation passed through the semiconductor sample 202 may be detected in different locations on the IR detector 203 even if the IR detector 203 does not rotate.

In some embodiments, the IR detector 203 may be configured to rotate around the semiconductor sample 202, and the IR radiation source 201 may be configured to remain stationary with respect to the semiconductor sample 202. For example, the IR radiation source 202 may be substantially circular or semi-circular. Thus, as the IR detector 203 rotates around the semiconductor sample 202, the IR detector 203 can detect IR radiation passed through the semiconductor sample from different directions.

The IR radiation source 201 may be attached to a rotation device. The rotation device may be configured to rotate the IR radiation source 201 around the semiconductor sample 202. Thus, the rotation device may be configured to rotate the semiconductor sample 202 around a rotational axis with respect to the IR radiation source 201.

The IR detector 203 may be attached to a rotation device. The rotation device may be configured to rotate the IR detector 203 around the semiconductor sample 202. Thus, the rotation device may be configured to rotate the semiconductor sample 202 around a rotational axis with respect to the IR detector 203.

Fig. 8 illustrates a schematic representation of a system for inspecting semiconductor samples according to an embodiment. The semiconductor sample 203 may be configured to rotate with respect to the IR radiation source 201 and/or the IR detector 203.

The semiconductor sample 202 may be attached to a rotation device. The rotation device may be configured to rotate the semiconductor sample 202 around a rotational axis with respect to the IR radiation source 201. The rotation device may be configured to rotate the semiconductor sample 202 around a rotational axis with respect to the IR detector 203.

As a person skilled in the art can appreciate, both in the embodiment of Fig. 7 and in the embodiment of Fig. 8, the rotation device may be configured to rotate the semiconductor sample 202 around a rotational axis with respect to the IR detector 203. Since the rotational movement between the semiconductor sample 202 and the IR detector 203 is relative, the semiconductor sample 202 may rotate or the IR detector 203 may rotate around the semiconductor sample 202.

According to an embodiment, the method 100 further comprises a step of moving the semiconductor sample along a movement axis with respect to the IR detector.

For example, the system 200 may further comprise a movement device configured to move the semiconductor sample 202 along a movement axis with respect to the IR detector 203. The movement device may be attached to the semiconductor sample 202. The movement device may be implemented using any device and/or components that can move the semiconductor sample 202 along the movement axis. For example, the movement device may be implemented using an electric motor, or a linear electric motor.

According to an embodiment, the rotational axis is substantially parallel with the movement axis.

Helical or spiral movement may be achieved by combining the aforementioned rotation and the aforementioned movement. For example, the IR radiation source 201 and/or the IR detector 203 may rotate around a rotational axis with respect to the semiconductor sample 202 similarly as in the embodiment of Fig. 7. Meanwhile, the semiconductor sample 202 may move linearly along a movement axis. The movement axis may be substantially parallel with the rotational axis. Alternatively, the semiconductor sample 202 may rotate around a rotational axis with respect to the IR radiation source 201 and/or the IR detector 203 and move linearly substantially along the same rotational axis.

Due to the rotation, the IR detector 203 may image a thin slice of the semiconductor sample 202 my receiving the IR radiation 206 passed through the semiconductor sample from the plurality of directions. Since the semiconductor sample 202 may also move along the movement axis, the IR detector 203 may image a plurality of such slices from different parts of the semiconductor sample 202 along the movement axis.

The computing device 204 may also be configured to control other components of the system 200. For example, the computing device 204 may control the timing, amplitude, beam geometry, or any other properties of the IR radiation emitted by the IR radiation source 201. The computing device 204 may control the rotation device. The computing device 204 may control the movement device.

According to an embodiment, the system 200 may further comprise an anti-scatter grid positioned between the semiconductor sample 202 and the IR detector 203.

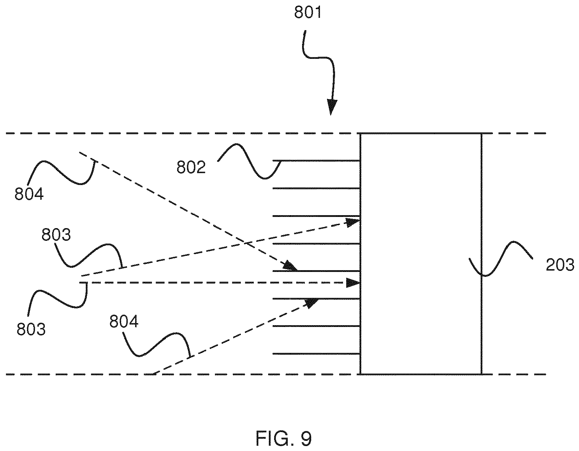

Fig. 9 illustrates a schematic representation of an IR detector 203 comprising an anti-scatter grid 801. The anti-scatter grid 801 may comprise a plurality of strips 802. The strips 802 may be thin protrusions on the surface of the IR detector 203. The strips 802 may be thinner in one dimension along the surface of the IR detector 203 than in another dimension along the surface of the IR detector 203. The strips 802 may comprise any IR absorbing material. The strips 802 may be substantially perpendicular to the surface of the IR detector 203.

As can be seen from the embodiment of Fig. 9, the strips 802 may absorb IR rays 804 that are not substantially perpendicular to the surface of the IR detector 203, while the strips 802 may not absorb IR rays 803 that are substantially perpendicular to the surface of the IR detector 203. Thus, the anti-scatter grid 801 can reduce the amount of scattered IR radiation absorbed by the IR detector 203.

The strips 802 may also be angled with respect to the normal of the surface of the IR detector 203. The angle of the strips 802 may vary between different locations on the surface of the IR detector 203. For example, if fan beam geometry is used, non-scattered IR rays may not be perpendicular to the surface of the IR detector 203. The angle of the strips 802 may be configured according to the used IR beam geometry.

According to an embodiment, the method 100 further comprises producing a model of the semiconductor sample based on the at least one sinogram. The model may comprise at least one cross-sectional image of the semiconductor sample and/or a three-dimensional model of the semiconductor sample.

According to an embodiment, the at least one cross-sectional image and/or the at least one three-dimensional model may be produced using reconstruction.

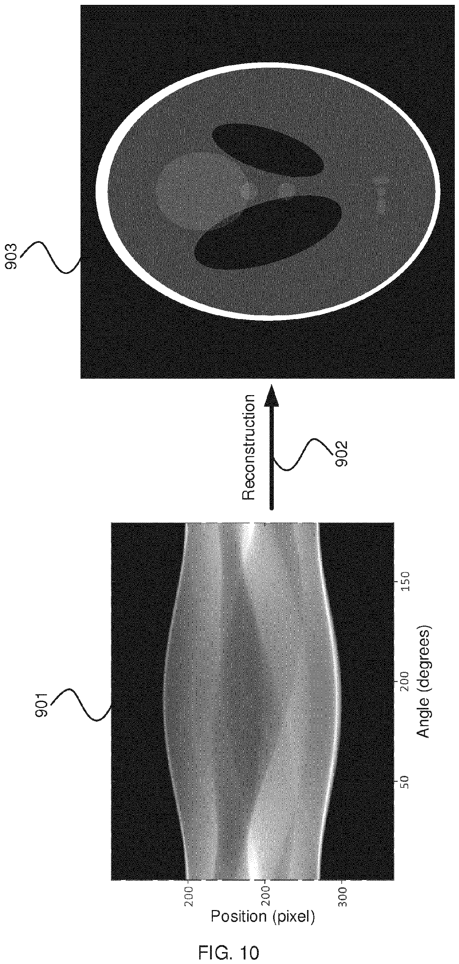

Fig. 10 illustrates a schematic representation of a sinogram 901 and a corresponding cross-sectional image 903. The cross-sectional image 903 may be obtained from the sinogram 901 using reconstruction 902.

As a person skilled in the art can appreciate, the reconstruction 902 may be implemented using various computational algorithms. The reconstruction 902 may be based on an inverse Radon transform. The algorithm used may depend, for example, on the beam geometry used to obtain the sinogram 901.

The sinogram 901 and the cross-sectional image 903 presented in the embodiment of Fig. 10 are only exemplary. Although the sinogram 901 is illustrated as an image in Fig. 10, as a person skilled in the art is aware, this is only an illustration of a sinogram 901. A sinogram 901 may exist in various forms. For example, an array of data in the memory of the computing device 204 may be a sinogram. The data in such an array may represent voltage values obtained from the pixels of the IR detector 203.

The sinogram 901 may be a function of two variables, such as a position and an angle. In the embodiment of Fig. 10, the position correspond to the vertical axis of the sinogram 901 and the angle corresponds to the horizontal axis of the sinogram 901. The position may correspond to a position on the IR detector 203. The position may be measured in pixels, micrometres, millimetres, centimetres, or in any other measurement units. The angle may correspond to a rotation angle around the semiconductor sample 202. For example, a single vertical column in the sinogram 901 may correspond to the IR radiation distribution over the IR detector 903 for a given rotation angle. Thus, a single vertical column may correspond to a single direction in the second plurality of directions 602 of the IR detector 203.

In the sinogram 901 presented in the embodiment of Fig. 10, darker colours may correspond to a higher received IR intensity, while whiter colours may correspond to a lower receiver IR intensity.

In the cross-sectional image 903 presented in the embodiment of Fig. 10, darker colours may correspond to regions in the semiconductor sample that have a higher IR transmittance, while whiter colours may correspond to regions of a lower IR transmittance. Thus, whiter colours may indicate regions where the IR attenuation coefficient is higher, and darker colours may indicate regions where the IR attenuation coefficient is lower. This is only an example, and the correspondence between the colours and the IR transmittance may be, for example, inversed. The relative relation, whereby brighter colours refer to areas with the opposite transmittance compared to areas of darker colours, may remain the same.

The cross-sectional image 903 may indicate the internal structure of the scanned semiconductor sample. For example, if the semiconductor sample 202 comprises defects, the defects may be detectable in the cross-sectional image 903 as regions of higher or lower attenuation coefficient compared to surrounding regions.

A three-dimensional (3D) model of the semiconductor sample 202 may be produced using, for example, a plurality of sinograms. The 3D model may indicate IR attenuation coefficient values for regions inside the semiconductor sample. Each sinogram may correspond to a cross-section of the semiconductor sample 202.

The sinogram 901 may also be a function of more than two variables. For example, if a cone beam geometry is used, the sinogram may be a function of two spatial coordinates and an angle. The spatial coordinates may correspond to a location on the IR detector 903, when the IR detector 903 comprises a matrix or an array of pixels. In such a case, the reconstruction 902 may be implemented using a two-dimensional inverse Radon transform or similar. The reconstruction 902 may then produce a three-dimensional model of the scanned semiconductor sample instead of a cross-sectional image. Alternatively or additionally, a plurality of sinograms 901 may be used to produce a 3D model or a plurality of cross-sectional images 903 may be used to produce a 3D model.

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A method for semiconductor inspection (100), comprising:
emitting (101) infrared, IR, radiation onto a semiconductor sample from a first plurality of directions with respect to the semiconductor sample, wherein at least part of the IR radiation passes through the semiconductor sample;
detecting (102) the IR radiation passed through the semiconductor sample from a second plurality of directions with respect to the semiconductor sample; and
producing (103) at least one sinogram based on the detected IR radiation.

2. The method for semiconductor inspection (100) according to claim 1, further comprising producing a model of the semiconductor sample based on the at least one sinogram, wherein the model comprises at least one of:
at least one cross-sectional image of the semiconductor sample; and
a three-dimensional model of the semiconductor sample.

3. The method for semiconductor inspection (100) according to claim 2, further comprising:
based on the model, detecting at least one of:
a number of defects in the semiconductor sample;
a size of at least one defect in the semiconductor sample; and
a location of at least one defect in the semiconductor sample.

4. The method for semiconductor inspection (100) according to claim 3, further comprising:
assigning a rating for the semiconductor sample according to at least one of:
the number of defects in the semiconductor sample;
the size of the at least one defect in the semiconductor sample; and
the location of the at least one defect in the semiconductor sample.

5. The method for semiconductor inspection (100) according to any preceding claim, wherein the detecting (102) the IR radiation passed through the semiconductor sample from the second plurality of directions with respect to the semiconductor sample comprises rotating the semiconductor sample around a rotational axis with respect to an IR detector.

6. The method for semiconductor inspection (100) according to claim 5, further comprising:
moving the semiconductor sample along a movement axis with respect to the IR detector.

7. The method for semiconductor inspection (100) according to claim 6, wherein the rotational axis is substantially parallel with the movement axis.

8. The method for semiconductor inspection (100) according to any preceding claim, wherein the IR radiation is emitted onto the semiconductor sample using a fan beam geometry.

9. The method for semiconductor inspection (100) according to any preceding claim, wherein the semiconductor sample comprises at least one of:
a II-VI semiconductor; and
a III-V semiconductor.

10. A semiconductor inspection system (200), comprising:
an infrared, IR, radiation source (201) configured to:
emit IR radiation (205) onto a semiconductor sample (202) from a first plurality of directions (601) with respect to the semiconductor sample (202), wherein at least part of the IR radiation passes through the semiconductor sample (202);
an IR detector (203) configured to:
detect the IR radiation (206) passed through the semiconductor sample (202) from a second plurality of directions (602) with respect to the semiconductor sample (202); and
a computing device (204), coupled to the IR detector (203), configured to:
produce at least one sinogram (901) based on the detected IR radiation.

11. The semiconductor inspection system (200) according to claim 10, wherein the computing device (204) is further configured to perform at least one of:
produce at least one cross-sectional image (903) of the semiconductor sample (202) based on the at least one sinogram (901); and
produce at least one three-dimensional model of the semiconductor sample (202) based on the at least one sinogram (901).

12. The semiconductor inspection system (200) according to claim 10 or claim 11, further comprising a rotation device configured to rotate the semiconductor sample (202) around a rotational axis with respect to the IR detector (203).

13. The semiconductor inspection system (200) according to claim 12, further comprising a movement device configured to move the semiconductor sample (202) along a movement axis with respect to the IR detector (203) .

14. The semiconductor inspection system (200) according to any of claims 10 - 13, further comprising an anti-scatter grid (801) positioned between the semiconductor sample (202) and the IR detector (203).

15. The semiconductor inspection system (200) according to any of claims 10 - 14, wherein the IR radiation source (201) is configured to emit the IR radiation (205) using a fan beam geometry.
